(19) **Europäisches Patentamt / European Patent Office / Office européen des brevets**

(11) **EP 4 229 289 B1**

(12) **FASCICULE DE BREVET EUROPEEN**

(45) Date de publication et mention de la délivrance du brevet:
**21.01.2026 Bulletin 2026/04**

(21) Numéro de dépôt: **21785944.6**

(22) Date de dépôt: **14.09.2021**

(51) Classification Internationale des Brevets (IPC):
**F02D 13/02** *(2006.01)* **F02D 41/00** *(2006.01)*
**F02D 41/10** *(2006.01)* **F02D 41/14** *(2006.01)*

(52) Classification Coopérative des Brevets (CPC):
**F02D 41/005; F02D 13/0261; F02D 41/0007; F02D 41/006; F02D 41/10; F02D 41/1445; F02D 41/1448; F02D 41/1497;** F01N 9/00; F01N 2900/08; F01N 2900/1406; F01N 2900/1411; F02D 2041/001; F02D 2250/21; Y02T 10/12;
(Cont.)

(86) Numéro de dépôt international:
**PCT/FR2021/051566**

(87) Numéro de publication internationale:
**WO 2022/084596 (28.04.2022 Gazette 2022/17)**

(54) **PROCÉDÉ DE DETERMINATION D'UNE CONSIGNE DE POSITION MAXIMALE DE TURBINE DE TURBOCOMPRESSEUR**

VERFAHREN ZUR BESTIMMUNG EINES MAXIMALEN POSITIONSSOLLWERTS FÜR EINE TURBOLADERTURBINE

METHOD FOR DETERMINING A MAXIMUM POSITION SETPOINT FOR A TURBOCHARGER TURBINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.10.2020 FR 2010697**

(43) Date de publication de la demande:
**23.08.2023 Bulletin 2023/34**

(73) Titulaire: **Stellantis Auto SAS**
**78300 Poissy (FR)**

(72) Inventeurs:
• **CHASSAGNARD, Sylvain**
**95800 COURDIMANCHE (FR)**
• **ACHIR, Ali**
**78955 CARRIERES SOUS POISSY (FR)**
• **COTTE, Anthony**
**78150 LE CHESNAY (FR)**

(74) Mandataire: **PSIP**
**Stellantis Auto SAS**
**Service REIP - YT800**
**43, rue Jean Pierre Timbaud**
**78300 Poissy (FR)**

(56) Documents cités:
EP-A1- 3 594 480  WO-A1-2020/043964
DE-A1- 102015 205 194  FR-A1- 3 021 702

(52) Classification Coopérative des Brevets (CPC):
(Cont.)Y02T 10/40

(52) Classification Coopérative des Brevets (CPC):
(Cont.)Y02T 10/40

## Description

La présente invention concerne le domaine de la commande des systèmes de suralimentation des moteurs à combustion interne. Cette invention a pour objet un procédé de détermination d'une consigne finale d'une grandeur caractéristique de l'ouverture d'une turbine de turbocompresseur.

L'adoption des normes antipollution a orienté l'industrie automobile à optimiser continuellement le rendement des moteurs thermiques. L'utilisation de la suralimentation couplée à un downsizing des moteurs a permis un grand pas en avant dans ce sens. Aujourd'hui, pour continuer de réduire les émissions polluantes dans le cadre de la réglementation €7 européenne, Sulev30 aux US et China7 en Chine, l'adoption du cycle de combustion Miller couplé à une turbine à géométrie variable se généralise. Ces solutions permettent également la réduction de la consommation des véhicules à moteur thermique. Pour maximiser le couple d'un moteur thermique, il faut enfermer le plus d'air possible dans la chambre de combustion tout en maintenant une combustion stable et efficiente. Ce gavage en air frais du moteur se fait principalement en augmentant la pression en entrée des cylindres à l'aide d'un compresseur, dans la majorité des cas. Cependant, pour que l'air frais soit admis, il faut que les gaz de la chambre de combustion soient bien évacués. En fonctionnement normal, pour un cas de vie stabilisé la fermeture progressive de l'actionneur de la turbine permet une montée en pression d'admission. Dans ce cas, le remplissage du cylindre augmente et l'efficacité de la combustion est maintenue car les gaz imbrulés résiduels ne varient pas ou peu. Par conséquent, le couple augmente. Un tel procédé est connu du document US7124582B2. D'autres états de la technique pertinents se trouvent dans EP 3 594 480 A1 et DE 10 2015 205194 A1.

Cependant, une fermeture plus prononcée de l'actionneur continue de faire monter la pression à l'échappement mais maintenant, cette augmentation entraine une augmentation des gaz brulés dans la chambre de combustion réduisant le remplissage en air frais tout en réduisant l'efficacité de la combustion. Dans ce cas, malgré l'augmentation de la pression d'admission, le débit d'air chute et la combustion se dégrade. De plus, l'augmentation des pertes par pompage s'intensifie parce que la pression échappement augmente plus vite que la pression d'admission. Le couple moteur résultant se dégrade alors.

En transitoire de charge, le principe reste le même mais cette fois-ci en dynamique. La fermeture de l'actionneur va engendrer une augmentation de la pression d'admission qui est transformée en débit d'air. Cette montée en air sera alors à son tour consommée par la turbine, ce qui augmentera la pression en amont de la turbine.

Cependant, si la turbine est trop fermée, la pression à l'échappement peut entrainer une mauvaise vidange des gaz enfermés dans la chambre de combustion augmentant la quantité de gaz brulés résiduels dans la chambre, ces gaz pouvant être des gaz non évacués ou ré-aspirés, laissant alors moins de place pour enfermer l'air frais et rendant la combustion moins stable. Ce qui aura pour conséquence de limiter le débit d'air et donc la montée en couple, analogiquement à un fonctionnement stabilisé.

L'invention vise à remédier efficacement à ces inconvénients en proposant un procédé de détermination d'une consigne finale d'une grandeur caractéristique de l'ouverture d'une turbine de turbocompresseur équipant un moteur à combustion interne pendant phase transitoire de montée en couple du moteur dans lequel :

- on détermine en fonction d'au moins un paramètre de fonctionnement du moteur une première valeur de consigne de cette grandeur caractéristique,
- On détermine le régime moteur,
- On détermine la pression admission,
- On détermine la pression admission initiale au début de la phase transitoire de montée en couple du moteur,
- On adimensionne la pression admission par la pression admission initiale,
- On détermine une pression maximale admissible en amont de la turbine adimensionnée par la pression admission initiale, à partir d'une cartographie établissant cette pression en fonction du régime moteur et de pression admission adimensionnée,
- On détermine une pression maximale admissible en amont de la turbine par le produit de la pression maximale admissible en amont de la turbine adimensionnée et de la pression admission initiale.
- On détermine la pression en aval de la turbine,
- On détermine le débit de gaz d'échappement,
- On détermine le taux de détente, à partir du ratio de la pression maximale admissible en amont de la turbine sur la pression en aval de la turbine,
- On détermine une valeur maximale admissible de cette grandeur caractéristique pour laquelle on considère que, pour la valeur de ce paramètre de fonctionnement du moteur, la montée en couple du moteur est optimale, à partir du taux de détente et du débit de gaz d'échappement,
- On compare cette première valeur de consigne à une valeur limite maximale prédéterminée admissible de cette grandeur, et
- tant que la première valeur de consigne est inférieure à la valeur maximale, on applique comme consigne finale la première valeur de consigne, sinon on applique comme consigne finale la valeur limite maximale prédéterminée.

L'effet technique est de permettre une optimisation du couple moteur en transitoire via l'adaptation en continu de la consigne finale de la position turbine en fonction des conditions de fonctionnement moteur en phase transitoire.

Diverses caractéristiques supplémentaires peuvent être prévues, seules ou en combinaisons :
Selon une réalisation, le paramètre de fonctionnement moteur est le régime moteur, la valeur limite maximale prédéterminée admissible de cette grandeur caractéristique étant déterminée par une cartographie établissant cette valeur à partir du régime moteur.

Selon une réalisation dans laquelle le moteur est équipé de déphaseurs d'arbres à cames et de moyens de gestion de ces déphaseurs, le procédé comprend au moins un mode spécifique de gestion de ces déphaseurs et pour chaque mode spécifique une cartographie établissant une pression maximale admissible en amont de la turbine adimensionnée par la pression admission initiale, la pression maximale admissible en amont de la turbine étant ensuite sélectionnée en fonction du mode spécifique.

Selon une réalisation,

- On détermine une première correction de pression à partir d'une cartographie établissant cette première correction à partir du régime moteur et du croisement des arbres à cames,
- On détermine une seconde correction de pression, à partir d'une cartographie établissant cette seconde correction à partir du régime moteur et de la position de croisement des arbres à cames,
- On corrige la pression maximale admissible en amont de la turbine obtenue par le produit de la pression maximale admissible en amont de la turbine adimensionnée et de la pression admission initiale en y ajoutant ces deux corrections de pression.

Selon une réalisation, la pression maximale admissible en amont de la turbine est sélectionnée entre celle obtenue en en fonction du mode spécifique et celle obtenue avec les corrections de pression.

Selon une réalisation, la grandeur caractéristique de l'ouverture de la turbine est la position de l'actionneur des ailettes de la turbine si le turbocompresseur est un turbocompresseur à géométrie variable ou la grandeur caractéristique de l'ouverture de la turbine est la position de l'actionneur de vanne de décharge de la turbine si le turbocompresseur est un turbocompresseur à géométrie fixe.

L'invention concerne aussi un véhicule équipé d'un moteur à combustion interne suralimenté par un turbocompresseur, caractérisé en ce qu'il comprend un calculateur comprenant les moyens d'acquisition, de traitement par instructions logicielles stockées dans une mémoire ainsi que les moyens de commande requis à mise en œuvre du procédé de l'invention.

D'autres particularités et avantages apparaîtront à la lecture de la description ci-après d'un mode particulier de réalisation, non limitatif de l'invention, faite en référence aux figures dans lesquelles :

**[Fig 1]** : représente schématiquement un moteur à combustion interne de l'invention.
**[Fig 2]** : représente dans plusieurs cadres référencés de A à F, l'évolution en fonction du temps des paramètres respectifs suivants : Débit d'air, Pression admission, Pression amont turbine, CA50, Pertes par pompage, Couple moteur, ceci pour quatre positions d'actionneur opérant entre 75 à 90% de fermeture de ce dernier.
**[Fig 3]** : représente dans plusieurs cadres référencés de A à F, l'évolution en fonction du temps des paramètres respectifs suivants : Débit d'air, Pression admission, Pression amont turbine, CA50, Pertes par pompage, Couple moteur, ceci pour quatre positions de déphaseur admission et échappement.
**[Fig 4]** : illustre un champ turbine établissant la position maximum des ailettes en fonction du taux de détente et du débit de gaz d'échappement.
**[Fig 5]** : illustre un mode de réalisation du procédé de l'invention.
**[Fig 6]** : illustre l'effet de l'adimensionnement par la pression initiale.
**[Fig 7]** : illustre un autre mode de réalisation du procédé de l'invention.
**[Fig 8]** : illustre un autre mode de réalisation du procédé de l'invention.
**[Fig 9]** : illustre un autre mode de réalisation du procédé de l'invention.
**[Fig 10]** : illustre un autre mode de réalisation du procédé de l'invention.
**[Fig 11]** : illustre un autre mode de réalisation du procédé de l'invention.
**[Fig 12]** : illustre un autre mode de réalisation du procédé de l'invention.

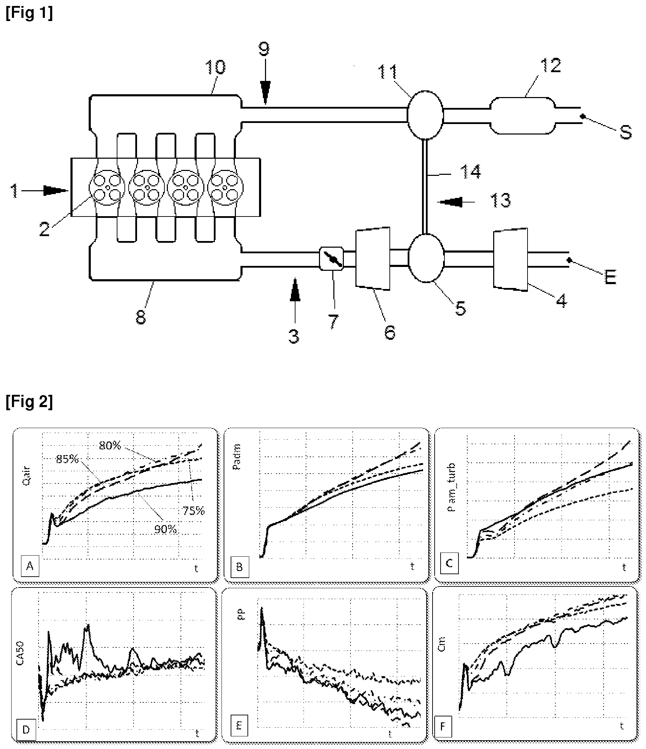

La figure 1 présente un moteur 1 à combustion interne à allumage commandé ou à allumage par compression, comprenant un bloc moteur avec au moins un cylindre 2, par exemple ici quatre cylindres, pour la combustion. Un tel moteur thermique peut équiper un véhicule, par exemple un véhicule automobile pour permettre un déplacement de celui-ci.

Les soupapes d'admission et/ou d'échappement des cylindres 2 sont actionnées par des arbres à cames, eux-mêmes reliés à un actionneur dénommé « déphaseur » d'arbre à cames permettant de modifier le calage angulaire de l'ensemble des arbres à cames par rapport au vilebrequin et donc le réglage des valeurs des instants d'ouverture et de fermeture des soupapes d'admission et/ou d'échappement.

Le moteur thermique comporte en outre un calculateur, non représenté, comprenant les moyens d'acquisition, de traitement par instructions logicielles stockées dans une mémoire ainsi que les moyens de commande requis à mise en œuvre du procédé détaillé après.

Le moteur thermique est relié à une ligne 3 d'admission d'air destinée à diriger vers le moteur thermique 1 l'air nécessaire à son fonctionnement. La ligne d'admission 3 comprend classiquement et dans cet ordre selon le sens de l'écoulement de l'air dans la ligne :

- une entrée E d'air,
- un filtre à air 4 pour retenir les poussières contenues dans l'air admis,
- un compresseur 5 de turbocompresseur 13,
- un refroidisseur 6 d'air comprimé,
- une vanne de dosage d'air 7 pour le contrôle du débit d'air admis dans le moteur 1, pouvant être par exemple classiquement un boitier papillon,
- un répartiteur d'air 8 vers les cylindres 2 du moteur thermique.

Le moteur thermique est encore relié à une ligne d'échappement 9 pour l'évacuation des gaz de combustion produits dans les cylindres 2 pendant le fonctionnement du moteur. La ligne d'échappement 9 comprend classiquement et dans cet ordre selon le sens de l'écoulement des gaz dans la ligne :

- un collecteur 10 de gaz d'échappement,
- une turbine 11 de turbocompresseur 13 pour la détente des gaz d'échappement et l'entrainement du compresseur 5. La turbine 11 et le compresseur 5 du turbocompresseur 13 sont reliés par un arbre 14 d'entrainement.
- au moins un organe 12 de dépollution, tel que par exemple un catalyseur d'oxydation, un filtre à particules,
- une sortie S des gaz d'échappement.

Le turbocompresseur 13 peut être du type à géométrie variable comprenant des ailettes mobiles, l'inclinaison des ailettes du stator qui canalisent l'introduction du gaz dans les aubes du rotor de turbine étant par exemple variable et pilotée par le calculateur. Dans ce cas, une grandeur caractéristique de l'ouverture de la turbine 11, peut-être une valeur représentative de la position des ailettes.

Le turbocompresseur 13 peut aussi être un turbocompresseur à géométrie fixe, et la turbine peut comprendre une vanne de décharge appelée en anglais "waste gate", pourvue d'une électrovanne pilotée par le calculateur, qui permet de réguler le débit et donc la pression en entrée de turbine 11. Dans ce cas, une grandeur caractéristique de l'ouverture de la turbine 11, peut-être une valeur représentative de l'ouverture de cet actionneur de la vanne de décharge.

L'invention propose une solution permettant de limiter la pression amont turbine afin d'optimiser le couple moteur pendant une phase transitoire de montée en couple du moteur. Cette solution ne nécessite pas de capteur de pression amont turbine et tient compte intrinsèquement des variations de la pression atmosphérique et de la condition initiale du transitoire. Cette solution est avantageuse pour l'optimisation du fonctionnement d'un turbocompresseur à géométrie variable mais peut également apporter un gain sur un système de suralimentation équipé d'un turbocompresseur à géométrie fixe.

L'objectif de l'invention est d'élaborer une limitation de la consigne de position de l'actionneur d'un turbocompresseur à géométrie variable permettant d'optimiser les transitoires de couple d'un moteur à combustion interne. Plus précisément, élaborer une limitation de la consigne de pression amont turbine permettant de maximiser le couple moteur en transitoire. Cette dernière est ensuite traduite en position des ailettes du turbocompresseur grâce au modèle inverse turbine.

La figure 2 montre l'exemple d'évolution d'un transitoire, à position de came fixe, en fonction de la fermeture de l'actionneur, sur un turbocompresseur à géométrie variable. On remarque alors que la meilleure montée en couple (cadre F) et en débit d'air (cadre A) n'est pas forcément quand l'actionneur de la turbine est le plus fermé. En effet, pour l'essais à 90% de fermeture, la pression amont turbine (cadre C) est bien plus élevée que pour les autres fermetures, limitant ainsi la montée en pression d'admission (cadre B) et augmentant les pertes par pompage (cadre E). De plus, la fermeture trop prononcée entraine une dégradation de la combustion (cadre D). Il en résulte une montée en couple amoindrie (cadre F). La figure 2 illustre la forte dépendance de la montée en couple à la pression amont turbine, il existe donc une pression amont turbine à ne pas dépasser pour optimiser la réponse dynamique du moteur.

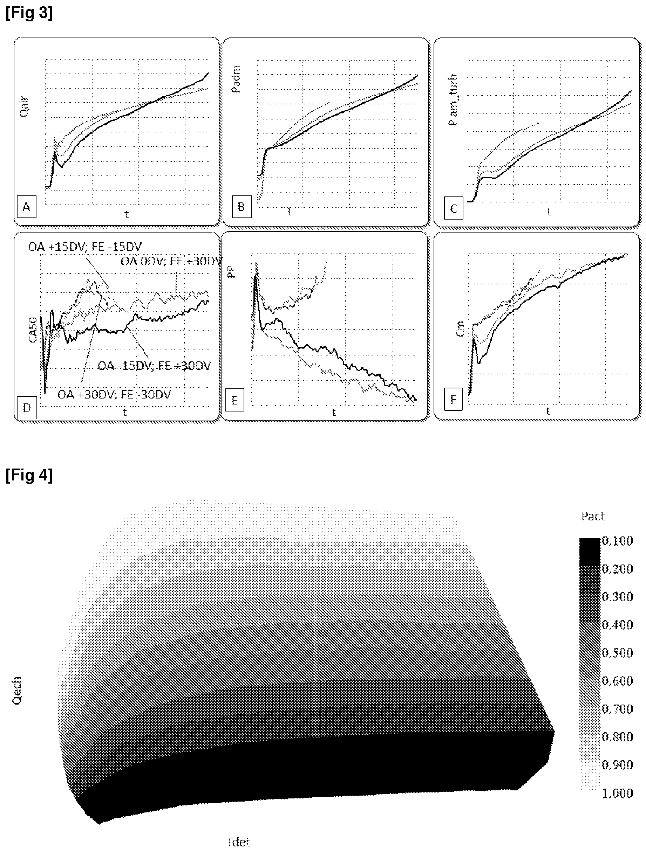

La figure 3 illustre l'impact du calage de l'arbre à came admission sur la réponse dynamique du moteur. En effet, la vidange du moteur est liée à l'instant d'ouverture de la soupape d'échappement (différence entre pression dans le cylindre et la pression dans le collecteur d'échappement) et le remplissage en air frais quant à lui est lié à l'instant de fermeture de la soupape d'admission (pression d'admission et pression cylindre). Un autre phénomène intervient également : le balayage, (balayage des gaz résiduels de la chambre par des gaz frais) qui est lié au temps pendant lequel les soupapes d'admission et d'échappement sont simultanément ouvertes (ouverture admission, OA et fermeture échappement, FE). De plus, le balayage peut aussi devenir négatif dans le cas où la pression à l'échappement est supérieure à celle d'admission, dans ce cas des gaz chauds de l'échappement peuvent revenir dans la chambre voire remonter dans les conduits d'admission (respectivement appelés ré-aspiration et contre-balayage). Il existe alors une forte dépendance de la réponse dynamique du moteur aux calages d'arbre à cames. Et qu'en fonction des calages d'arbres à cames, la pression échappement acceptable sera différente.

Les figures 2 et 3 permettent d'illustrer les phénomènes unitaires pour un régime donné. En réalité, lors d'un transitoire de couple, les réglages des actionneurs vont varier en fonction de la charge et du régime. Les calages d'arbres à cames évoluent en fonction de la charge et par conséquent la position turbine doit s'adapter aux réglages d'arbres à cames. Il faut alors introduire deux autres impacts non illustrés qui sont : la charge moteur et le régime moteur.

Fort de ces constats, la solution retenue est alors d'élaborer une consigne de pression amont turbine qui sera ensuite transformée en taux de détente en utilisant la pression aval turbine, puis en position via le champ turbine qui établit la position des ailettes de la turbine en fonction du taux de détente, et du débit de gaz d'échappement.

[Math1]

$$\text{Taux de détente} = \frac{\text{Pression amont turbine}}{\text{Pression aval turbine}}$$

La figure 4 illustre un tel champ turbine établissant la position des ailettes, Pact, en fonction du taux de détente, Tdet, et du débit de gaz d'échappement, Qech.

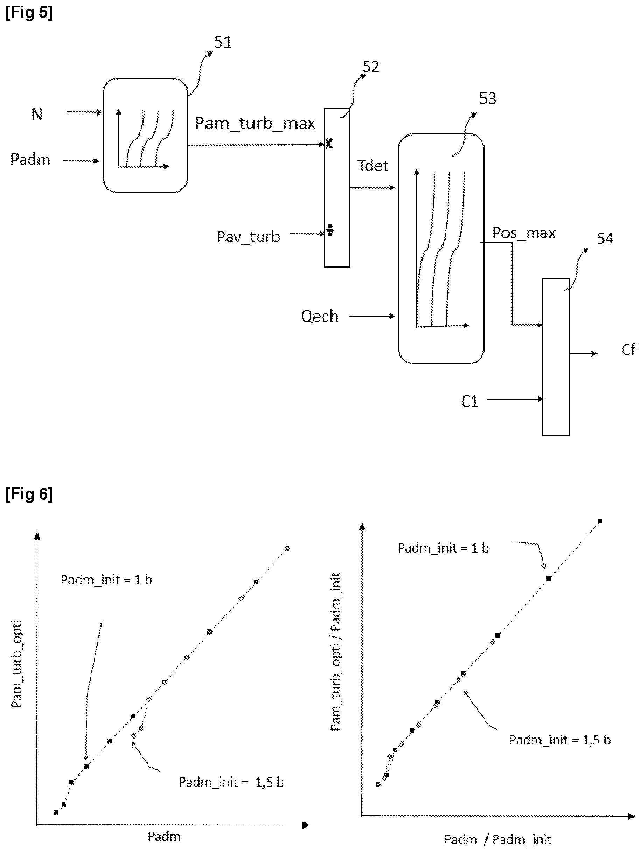

La figure 5 présente un mode de réalisation de la stratégie d'élaboration de la position des ailettes de la turbine du turbocompresseur à géométrie variable telle que décrite ci-dessus. Dans ce mode de réalisation, une cartographie 51 calcule la pression amont turbine maximale admissible en fonction de la pression admission, Padm, et du régime moteur, N. Ensuite, le taux de détente est calculé (bloc 52) à partir de la pression amont turbine maximale admissible et de la pression aval turbine, Pav_turb. Après, une autre cartographie 53 détermine la position des ailettes, Pos_max, en fonction du débit de gaz d'échappement, Qech, et du taux de détente, Tdet. Au bloc 54 est effectuée la comparaison entre une première valeur de consigne C1, qui est la position demandée par le régulateur de suralimentation et la valeur de position maximale admissible, Pos_max, prédéterminée dans la cartographie, valeur pour laquelle on considère que la montée en couple du moteur est optimum. Cette comparaison permet d'établir la consigne finale, Cf : tant que la première valeur de consigne, C1, est inférieure à la valeur limite maximum, Pos_max, on applique comme consigne finale, Cf, la première valeur de consigne, C1, sinon on applique comme consigne finale, Cf, la valeur limite maximum prédéterminée, Pos_max.

Un complément d'essais au banc moteur a montré également le besoin d'adapter la pression amont turbine à la pression d'admission du début du transitoire, qu'on nommera pression d'admission initiale. En débutant le transitoire d'une pression d'admission initiale supérieure à la pression atmosphérique moyenne, la pression amont turbine maximale correspond alors à la pression d'admission initiale. Hors dans ce cas, la fermeture de l'actionneur est trop importante créant ainsi une dégradation de la réponse en couple.

La figure 6 illustre l'évolution de la pression en amont de la turbine admissible, Pam_turb_opti, en fonction de deux pressions d'admission initiales, Padm_init, (à gauche) et son évolution si la pression en amont de la turbine, Pam_turb, est adimensionnée par la pression d'admission initiale, Padm_init (à droite).

Une étude en simulation à différentes altitudes a également mis en évidence la notion de condition initiale et le besoin d'ajuster en fonction de l'altitude le profil de pression amont turbine. En réalité, en prenant en compte la pression initiale, le besoin de correction par la pression extérieure est déjà pris en compte. En effet, comme la pression considérée est prise en amont du boitier papillon, elle est directement liée à la pression ambiante et à la suralimentation naturelle du turbocompresseur (le régime turbo n'étant jamais vraiment nul, sa rotation, même avec l'actionneur pleinement ouvert, fournie une suralimentation naturelle).

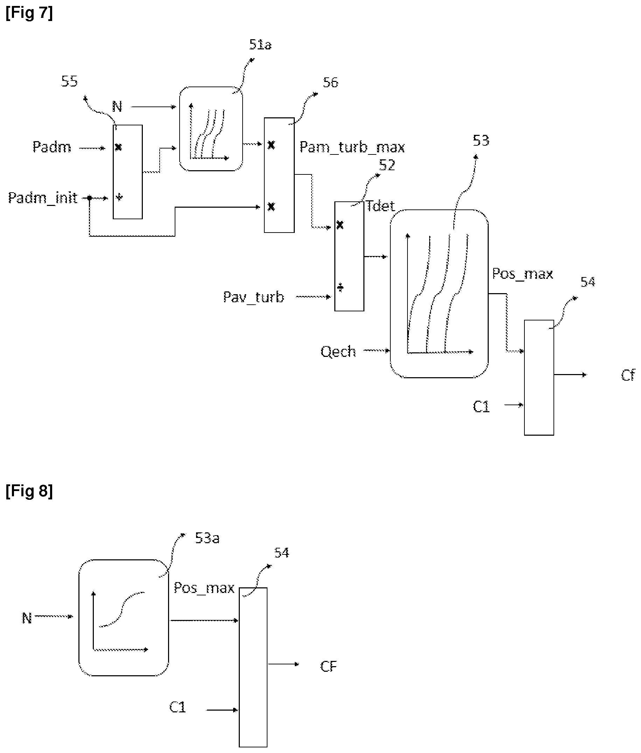

La figure 7 illustre un autre mode de réalisation avec la logique de limitation de la position avec la prise en compte de la correction par la pression initiale, Padm_init. La pression initiale, Padm_init est la pression admission mesurée au début de la phase traznsitoire de montée en couple. Ainsi, la pression admission, Padm, est adimensionnée par la pression initiale, Padm_init, (bloc 55), puis une cartographie 51a détermine une pression maximum admissible en amont de la turbine adimensionnée par la pression d'admission initiale. Cette pression admimensionnée est ensuite multipliée par la pression initiale, Padm_init, (bloc 56) pour donner la pression maximum admissible en amont de la turbine, Pam_turb_max. On détermine ensuite le taux de détente, Tdet, (bloc 52) et la position maximale, Pos_max, (bloc 53) qui servira à saturer la consigne (bloc 54).

La solution décrite précédemment reste valable même si le moteur n'est pas équipé de déphaseur d'arbre à cames. Si c'est le cas, la calibration de la cartographie de limitation de la pression amont turbine sera approximative et la position finale des ailettes le sera également.

L'établissement de la consigne de pression amont turbine peut se faire de plusieurs façons différentes : soit les positions d'arbres à cames sont connues à l'avance (arbres à cames fixes par exemple), soit les arbres à cames évoluent en dynamique.

Plusieurs variantes de réalisation peuvent être prévues. La variante illustrée en figure 8 est la plus minimaliste possible. Elle consisterait à imposer directement une position maximale, Pos_max des ailettes en fonction du seul régime moteur, N, via une cartographie simplifiée 53a. Cependant, cette variante ne sera pas du tout précise et sera beaucoup trop limitante car ne tient pas compte de tous les phénomènes décrits précédemment.

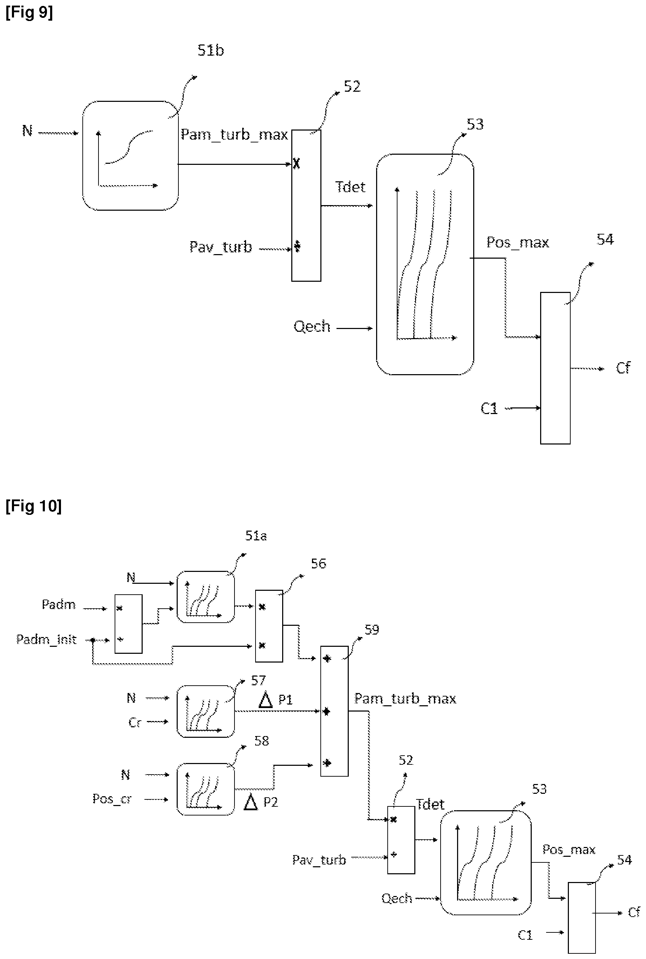

La figure 9 présente une autre variante de réalisation. Cette variante est également simplifiée. En effet, il s'agit de simplement imposer une valeur de pression amont turbine maximale par régime moteur. Dans cette variante, le débit d'échappement est pris en compte ainsi que la pression aval turbine qui évolueront en fonction de la charge. La position maximale ne sera donc pas constante mais évolutive. En revanche, ce modèle sera très peu précis car il ne prend pas en compte la pression d'admission initiale ni le réglage de distribution.

La figure 10 présente une autre variante de réalisation. Dans le cas d'un moteur équipé de déphaseurs d'arbre à cames dans lequel les positions de cames ne peuvent être connues à l'avance, il faut que cette réalisation englobe tous les cas plausibles. Il faut alors introduire des corrections en fonction des positions de cames. Les critères retenus sont le croisement, Cr et la position du croisement, Pos_cr, pendant le cycle. Le croisement, durée pendant laquelle les soupapes d'admission et d'échappement sont simultanément ouvertes, influence la masse balayée dans les cas positifs mais aussi la masse de gaz renvoyé à l'admission (contre balayage) à même instant de croisement. La position du croisement, position relative au point mort haut du croisement maximal, influence la vidange des gaz à même croisement. Le modèle créé peut alors s'écrire sous la forme suivante :

[Math 2]

$$P_{am\_turb\_max} = \left(\frac{P_{ech\,max}}{P_{adm\_init}}\right)_{(N, P_{adm})} \times P_{adm\_init} + \Delta P1 + \Delta P2$$

Avec ΔP1 une première correction de pression en aval de la turbine, fonction du croisement (en DV) et du régime moteur, N, calculé au bloc 57, et ΔP2 une seconde correction de pression en aval de la turbine, fonction de la position du croisement pendant le cycle et le régime moteur, calculé au bloc 58. La première correction de pression, ΔP1, est obtenue à partir d'une cartographie établissant cette première correction, ΔP1, à partir du régime moteur, N, et du croisement des arbres à cames, Cr. Une seconde correction de pression, ΔP2, est obtenue à partir d'une cartographie établissant cette seconde correction, ΔP2, à partir du régime moteur, N et de la position de croisement des arbres à cames, Pos_cr. On corrige ensuite la pression maximale admissible en amont de la turbine obtenue au bloc 56 par le produit de la pression maximale admissible adimensionnée en amont de la turbine et de la pression admission initiale en y ajoutant ces deux corrections de pression, ΔP1 ; ΔP2. On obtient alors la valeur de la pression maximale admissible en amont de la turbine, Pam_turb_max qui sera utilisée pour déterminer la consigne de position finale, Cf.

Cette solution est une solution moyenne englobant tous les cas possibles. Il en résulte donc une incertitude sur la pression maximum admissible en amont de la turbine et donc une imprécision sur la valeur de consigne finale. Si certains cas de vie nécessitent une précision plus fine, cette solution n'est donc pas optimale. De plus, la calibration sera plus longue que la solution principale car il est nécessaire d'effectuer une caractérisation de tous les cas de vie possibles.

Dans le cas d'un mode spécifique de gestion des arbres à cames, si aucune calibration spécifique n'était faite, sur les faibles pressions d'admission, la pression amont turbine admissible serait trop faible et l'actionneur de turbine serait trop ouvert. La conséquence est un manque de couple moteur.

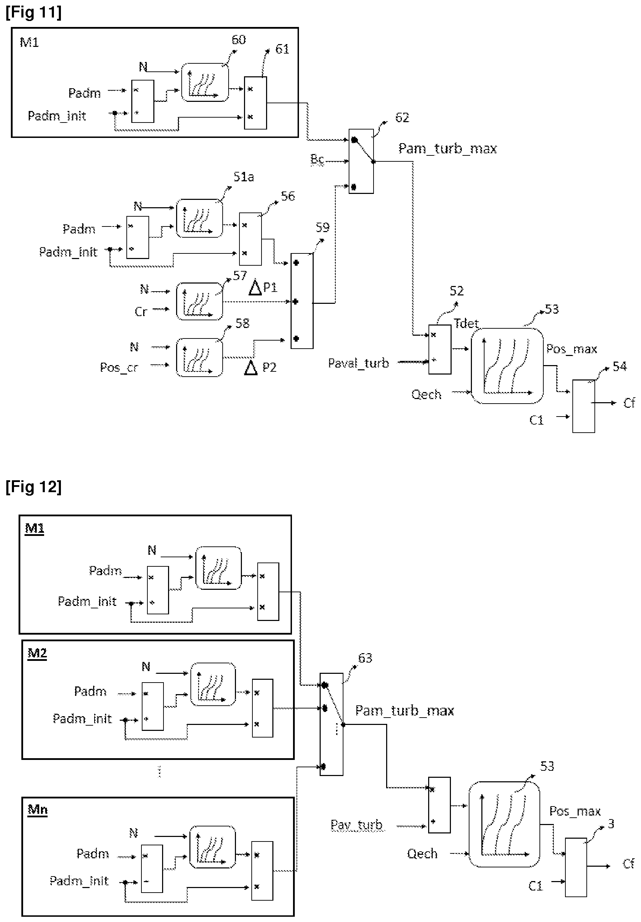

La figure 11 présente une autre variante de réalisation. Dans le cas d'un moteur équipé de déphaseurs d'arbre à cames possédant un mode de gestion des déphaseurs d'arbre à came spécifique. Sur ce mode spécifique M1, la trajectoire des déphaseurs est connue, la calibration de la pression d'échappement maximale admissible en amont de la turbine est alors plus simple, puisque les corrections en fonction des déphaseurs ne sont plus utiles sur cette branche. Elle peut alors être isolée du reste et activée que lorsque le moteur entre dans ce mode. La trajectoire des déphaseurs peut être fonction de la pression d'admission.

La figure 11 illustre le nouveau schéma bloc qui devient une combinaison de la solution de la figure 7 et de la variante de la figure 10. L'ajout d'une cartographie adaptée au mode spécifique M1 d'un ratio pression admission sur pression d'admission initiale maximal admissible (bloc 60) retransformé en pression amont turbine maximale (bloc 61) puis un commutateur (bloc 62) permettant de passer d'un réglage à l'autre en fonction d'un booléen, Bc, permet de réaliser le meilleur compromis.

Cette solution permet de conserver une approche moyenne pour englober la plupart des cas de vie et d'y associer une calibration fine lorsque nécessaire. Elle ne permet pas de gain de temps, mais n'est pas plus chronophage que la variante de la figure 10 car il n'y a pas besoin de caractériser d'autres cas de vie.

La figure 12 présente une autre variante de réalisation. Dans ce mode de réalisation, plusieurs cas de vie M1 à Mn sont connus et les positions d'arbre à came aussi. L'association pour ces modes spécifiques M1 à Mn d'une cartographie propre à chacun de ces modes et établissant une pression maximale admissible en amont de la turbine adimensionnée est possible avec l'utilisation d'un commutateur (bloc 63) pour sélectionner le mode activé. Cette variante devient donc une duplication de la solution de la figure 7 et une sélection par commutateur, 63, pour choisir en fonction du mode spécifique la pression maximale admissible en amont de la turbine, Pam_turb_max, qui sera utilisée pour déterminer la consigne de position finale, Cf. Cette solution est alors plus rapide à calibrer et la variante la plus précise, cependant elle est moins flexible à un changement de réglage de distribution.

L'invention permet d'optimiser la vidange des cylindres tout en récupérant le plus d'énergie à la turbine, ce qui optimise également la réponse en couple du moteur en transitoire.

Sans le pilotage judicieux de l'invention, la réponse en couple du moteur en transitoire est dégradée. Cette solution ne nécessite pas de capteur supplémentaire tel qu'un capteur de pression amont turbine et peut être appliquée également à une turbine équipé d'une soupape de décharge TGF. Cette nouvelle approche est générique et ne fait pas de distinction entre un turbocompresseur à géométrie fixe ou variable.

**Revendications**

1. Procédé de détermination d'une consigne finale (Cf) d'une grandeur caractéristique de l'ouverture d'une turbine (11) de turbocompresseur (13) équipant un moteur (1) à combustion interne pendant une phase transitoire de montée en couple du moteur (1), dans lequel :

 - on détermine en fonction d'au moins un paramètre de fonctionnement du moteur (1) une première valeur de consigne (C1) de cette grandeur caractéristique,
 - On détermine le régime moteur (N),
 - On détermine la pression admission (Padm),
 - On détermine la pression admission initiale (Padm_init) au début de la phase transitoire de montée en couple du moteur,
 - On adimensionne (55) la pression admission (Padm) par la pression admission initiale (Padm_init),
 - On détermine (51a) une pression maximale admissible en amont de la turbine adimensionnée par la pression admission initiale (Padm_init), à partir d'une cartographie établissant cette pression en fonction du régime moteur (N) et de pression admission (Padm) adimensionnée,
 - On détermine (56) une pression maximale admissible en amont de la turbine (Pam_turb_max) par le produit de la pression maximale admissible en amont de la turbine adimensionnée et de la pression admission initiale (Padm_init).
 - On détermine la pression en aval de la turbine (Pav_turb),
 - On détermine le débit de gaz d'échappement (Qech),
 - On détermine (52) le taux de détente (Tdet), à partir du ratio de la pression maximale admissible en amont de la turbine (Pam_turb_max) sur la pression en aval de la turbine (Pav_turb),
 - On détermine une valeur maximale (Pos_max) admissible de cette grandeur caractéristique pour laquelle on considère que, pour la valeur de ce paramètre de fonctionnement du moteur, la montée en couple du moteur est optimale, à partir du taux de détente (Tdet) et du débit de gaz d'échappement (Qech),
 - on compare (54) cette première valeur de consigne (C1) à une valeur limite maximale prédéterminée (Pos_max) admissible de cette grandeur caractéristique, et
 - tant que la première valeur de consigne (C1) est inférieure à la valeur maximale (Pos_max), on applique comme consigne finale (Cf) la première valeur de consigne (C1), sinon on applique comme consigne finale (Cf) la valeur limite maximale prédéterminée (Pos_max).

2. Procédé selon la revendication 1, **caractérisé en ce que** le moteur étant équipé de déphaseurs d'arbres à cames et de moyens de gestion de ces déphaseurs, il comprend au moins un mode spécifique de gestion de ces déphaseurs (M1) et pour chaque mode spécifique une cartographie établissant une pression maximale admissible en amont de la turbine adimensionnée par la pression admission initiale, la pression maximale admissible en amont de la turbine (Pam_turb_max) étant ensuite sélectionnée (63) en fonction du mode spécifique.

3. Procédé selon la revendication 1, **caractérisé en ce que**

- On détermine (57) une première correction de pression (ΔP1) à partir d'une cartographie établissant cette première correction (ΔP1) à partir du régime moteur (N) et du croisement des arbres à cames (Cr),
- On détermine (58) une seconde correction de pression (ΔP2), à partir d'une cartographie établissant cette seconde correction (ΔP2) à partir du régime moteur (N) et de la position de croisement des arbres à cames (Pos_cr),
- On corrige (59) la pression maximale admissible en amont de la turbine (Pam_turb_max) obtenue par le produit de la pression maximale admissible en amont de la turbine adimensionnée et de la pression admission initiale (Padm_init) en y ajoutant ces deux corrections de pression (ΔP1 ; ΔP2).

4. Procédé selon les revendications 2 et 3, **caractérisé en ce que** la pression maximale admissible en amont de la turbine (Pam_turb_max) est sélectionnée (62) entre celle obtenue en en fonction du mode spécifique (M1) et celle obtenue avec les corrections de pression (ΔP1 ; ΔP2).

5. Procédé selon l'une quelconque des revendications précédentes, **caractérisé en ce que** la grandeur caractéristique de l'ouverture de la turbine (11) est la position de l'actionneur des ailettes de la turbine (11) si le turbocompresseur (13) est un turbocompresseur à géométrie variable ou la grandeur caractéristique de l'ouverture de la turbine (11) est la position de l'actionneur de vanne de décharge de la turbine (11) si le turbocompresseur (13) est un turbocompresseur à géométrie fixe.

6. Véhicule équipé d'un moteur (1) à combustion interne suralimenté par un turbocompresseur (13), **caractérisé en ce qu'**il comprend un calculateur comprenant les moyens d'acquisition, de traitement par instructions logicielles stockées dans une mémoire ainsi que les moyens de commande requis à mise en œuvre du procédé selon l'une quelconque des revendications précédentes.

**Patentansprüche**

1. Verfahren zur Bestimmung eines endgültigen Sollwerts (Cf) einer Kenngröße für die Öffnung einer Turbine (11) eines Turboladers (13) eines Verbrennungsmotors (1) während einer transienten Drehmomentanstiegsphase des Motors (1), wobei: - ein erster Sollwert (C1) dieser Kenngröße in Abhängigkeit von mindestens einem Betriebsparameter des Motors (1) ermittelt wird, - die Motordrehzahl (N) ermittelt wird, - der Ansaugdruck (Padm) ermittelt wird, - der anfängliche Ansaugdruck (Padm_init) zu Beginn der transienten Drehmomentanstiegsphase des Motors ermittelt wird, - der Ansaugdruck (Padm) durch den anfänglichen Ansaugdruck (Padm_init) entdimensioniert wird (55), - ein maximal zulässiger Druck vor der entdimensionierten Turbine durch den anfänglichen Ansaugdruck (Padm_init) anhand eines Kennfelds ermittelt wird, das diesen Druck in Abhängigkeit von der Motordrehzahl (N) und dem Ansaugdruck (Padm) adimensional festlegt, - ermittelt wird (56) maximal zulässiger Druck vor der Turbine (Pam_turb_max) durch das Produkt aus dem maximal zulässigen Druck vor der Turbine und dem anfänglichen Einlassdruck (Padm_init). Der Druck nach der Turbine (Pav_turb) wird ermittelt. Der Abgasdurchsatz (Qech) wird ermittelt. Das Expansionsverhältnis (Tdet) wird aus dem Verhältnis des maximal zulässigen Drucks vor der Turbine (Pam_turb_max) zum Druck nach der Turbine (Pav_turb) ermittelt (52). Ein maximal zulässiger Wert (Pos_max) dieser Kenngröße wird ermittelt, wobei davon ausgegangen wird, dass bei diesem Motorbetriebsparameter die Drehmomentsteigerung des Motors optimal ist. Dieser erste Sollwert (C1) wird mit einem vorgegebenen maximal zulässigen Grenzwert (Pos_max) dieser Kenngröße verglichen (54). Solange der erste Sollwert (C1) kleiner als der Maximalwert (Pos_max) ist, wird der erste Sollwert (C1) als endgültiger Sollwert (Cf) verwendet. Andernfalls wird der vorgegebene maximale Grenzwert als endgültiger Sollwert (Cf) verwendet. (Pos_max).

2. Verfahren nach Anspruch 1, **dadurch gekennzeichnet, dass** der Motor mit Nockenwellenphasenschiebern und Mitteln zur Steuerung dieser Phasenschieber ausgestattet ist. Es umfasst mindestens einen spezifischen Modus zur Steuerung dieser Phasenschieber (M1) und für jeden spezifischen Modus ein Kennfeld, das einen maximal zulässigen Druck vor der Turbine festlegt, der asymmetrisch zum anfänglichen Ansaugdruck ist. Der maximal zulässige Druck vor der Turbine (Pam_turb_max) wird dann entsprechend dem spezifischen Modus ausgewählt (63).

3. Verfahren nach Anspruch 1, **dadurch gekennzeichnet, dass** - eine erste Druckkorrektur (ΔP1) aus einem Kennfeld ermittelt wird (57), das diese erste Korrektur (ΔP1) aus der Motordrehzahl (N) und dem Nockenwellenschnittpunkt (Cr) ermittelt, - eine zweite Druckkorrektur (ΔP2) aus einem Kennfeld ermittelt wird (58), das diese zweite Korrektur (ΔP2) aus der Motordrehzahl (N) und der Nockenwellenschnittpunktposition (Pos_cr) ermittelt, - der maximal zulässige Druck vor der Turbine (Pam_turb_max) durch Addition dieser beiden Druckkorrekturen (ΔP1; ΔP2) um das Produkt aus dem maximal zulässigen Druck vor der Turbine und dem anfänglichen Ansaugdruck (Padm_init) korrigiert wird (59).

**4.** Verfahren nach den Ansprüchen 2 und 3, **dadurch gekennzeichnet, dass** der maximal zulässige Druck vor der Turbine (Pam_turb_max) zwischen dem in Abhängigkeit vom spezifischen Modus (M1) und dem mit den Druckkorrekturen (ΔP1; ΔP2) ermittelten Druck (62) gewählt wird.

**5.** Verfahren nach einem der vorhergehenden Ansprüche, **dadurch gekennzeichnet, dass** die charakteristische Größe der Öffnung der Turbine (11) die Position des Aktuators der Turbinenschaufeln (11) ist, wenn der Turbolader (13) ein Turbolader mit variabler Geometrie ist, oder die charakteristische Größe der Öffnung der Turbine (11) die Position des Wastegate-Aktuators der Turbine (11) ist, wenn der Turbolader (13) ein Turbolader mit fester Geometrie ist.

**6.** Fahrzeug, das mit einem durch einen Turbolader (13) aufgeladenen Verbrennungsmotor (1) ausgestattet ist, **dadurch gekennzeichnet, dass** es einen Computer umfasst, der die Mittel zur Erfassung und Verarbeitung von in einem Speicher gespeicherten Softwareanweisungen sowie die Steuermittel umfasst, die zur Durchführung des Verfahrens nach einem der vorhergehenden Ansprüche erforderlich sind.

**Claims**

**1.** Method for determining a final setpoint (Cf) of a characteristic variable of the opening of a turbine (11) of a turbocharger (13) fitted to an internal combustion engine (1) during a transient torque increase phase of the engine (1), in which: -a first setpoint value (C1) of this characteristic variable is determined as a function of at least one operating parameter of the engine (1), -The engine speed (N) is determined, -The intake pressure (Padm) is determined, -The initial intake pressure (Padm_init) is determined at the start of the transient torque increase phase of the engine, -The intake pressure (Padm) is de-dimensioned (55) by the initial intake pressure (Padm_init), -A maximum admissible pressure upstream of the de-dimensioned turbine is determined by the initial intake pressure (Padm_init), from a map establishing this pressure as a function of the engine speed (N) and intake pressure (Padm) adimensional, -We determine (56) a maximum admissible pressure upstream of the turbine (Pam_turb_max) by the product of the maximum admissible pressure upstream of the adimensional turbine and the initial inlet pressure (Padm_init). -The pressure downstream of the turbine (Pav_turb) is determined, -The exhaust gas flow rate (Qech) is determined, -The expansion ratio (Tdet) is determined (52), from the ratio of the maximum permissible pressure upstream of the turbine (Pam_turb_max) to the pressure downstream of the turbine (Pav_turb), -A maximum permissible value (Pos_max) of this characteristic variable is determined, for which it is considered that, for the value of this engine operating parameter, the engine torque increase is optimal, from the expansion ratio (Tdet) and the exhaust gas flow rate (Qech), -This first setpoint value (C1) is compared (54) to a predetermined maximum permissible limit value (Pos_max) of this characteristic variable, and -As long as the first setpoint value (C1) is lower than the maximum value (Pos_max), the first setpoint value (C1) is applied as the final setpoint (Cf), otherwise it is applied as the final setpoint (Cf) the predetermined maximum limit value (Pos_max).

**2.** A method according to claim 1, **characterized in that** the engine is equipped with camshaft phase shifters and means for managing these phase shifters. It comprises at least one specific mode for managing these phase shifters (M1) and, for each specific mode, a map establishing a maximum admissible pressure upstream of the turbine, asymmetrical to the initial intake pressure, the maximum admissible pressure upstream of the turbine (Pam_turb_max) then being selected (63) according to the specific mode.

**3.** Method according to claim 1, **characterized in that** - A first pressure correction (ΔP1) is determined (57) from a map establishing this first correction (ΔP1) from the engine speed (N) and the camshaft intersection (Cr), - A second pressure correction (ΔP2) is determined (58), from a map establishing this second correction (ΔP2) from the engine speed (N) and the camshaft intersection position (Pos_cr), - The maximum admissible pressure upstream of the turbine (Pam_turb_max) is corrected (59) by the product of the maximum admissible pressure upstream of the adimensional turbine and the initial intake pressure (Padm_init) by adding these two pressure corrections (ΔP1; ΔP2).

**4.** Method according to claims 2 and 3, **characterized in that** the maximum permissible pressure upstream of the turbine (Pam_turb_max) is selected (62) between that obtained as a function of the specific mode (M1) and that obtained with the pressure corrections (ΔP1; ΔP2).

**5.** Method according to any one of the preceding claims, **characterized in that** the characteristic magnitude of the opening of the turbine (11) is the position of the actuator of the turbine blades (11) if the turbocharger (13) is a variable geometry turbocharger or the characteristic magnitude of the opening of the turbine (11) is the position of the wastegate actuator of the turbine (11) if the turbocharger (13) is a fixed geometry turbocharger.

6. Vehicle equipped with an internal combustion engine (1) supercharged by a turbocharger (13), **characterized in that** it comprises a computer comprising the means of acquisition, processing by software instructions stored in a memory as well as the control means required for implementing the method according to any one of the preceding claims.

[Fig 1]

[Fig 2]

[Fig 3]

[Fig 4]

[Fig 5]

[Fig 6]

[Fig 7]

[Fig 8]

[Fig 9]

[Fig 10]

**[Fig 11]**

**[Fig 12]**

**EP 4 229 289 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7124582 B2
- EP 3594480 A1
- DE 102015205194 A1